(19) Europäisches Patentamt
European Patent Office
Office européen des brevets

(11) **EP 3 412 923 B1**

(12) **EUROPEAN PATENT SPECIFICATION**

(45) Date of publication and mention
of the grant of the patent:
**25.11.2020 Bulletin 2020/48**

(21) Application number: **18759229.0**

(22) Date of filing: **11.04.2018**

(51) Int Cl.:
*F16B 37/04* (2006.01)    *B21H 3/08* (2006.01)
*B21J 5/00* (2006.01)    *B21K 1/56* (2006.01)
*B21K 1/60* (2006.01)    *B21K 1/70* (2006.01)
*F16B 33/02* (2006.01)    *F16B 37/00* (2006.01)
*F16B 37/06* (2006.01)

(86) International application number:
**PCT/JP2018/015259**

(87) International publication number:
**WO 2018/193937 (25.10.2018 Gazette 2018/43)**

(54) **RIVET NUT AND MANUFACTURING METHOD THEREFOR**

NIETMUTTER UND VERFAHREN ZUR HERSTELLUNG DAVON

ÉCROU DE RIVET ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2017 JP 2017081092**

(43) Date of publication of application:
**12.12.2018 Bulletin 2018/50**

(73) Proprietor: **Panasonic Intellectual Property
Management Co., Ltd.
Osaka-shi, Osaka 540-6207 (JP)**

(72) Inventor: **YOSHIMURA, Yo
Osaka 540-6207 (JP)**

(74) Representative: **Müller-Boré & Partner
Patentanwälte PartG mbB
Friedenheimer Brücke 21
80639 München (DE)**

(56) References cited:
**JP-A- H0 533 108      JP-A- 2001 317 518
JP-A- 2005 059 085     JP-A- 2009 144 095
JP-B2- H0 710 415      JP-U- S47 557
US-A1- 2012 028 070    US-A1- 2012 216 390**

**Description**

TECHNICAL FIELD

The disclosure relates to a rivet nut and a method for manufacturing the same.

BACKGROUND ART

Various structures of a junction part for joining two or more members are conventionally known (for example, Patent Literatures 1 to 5).

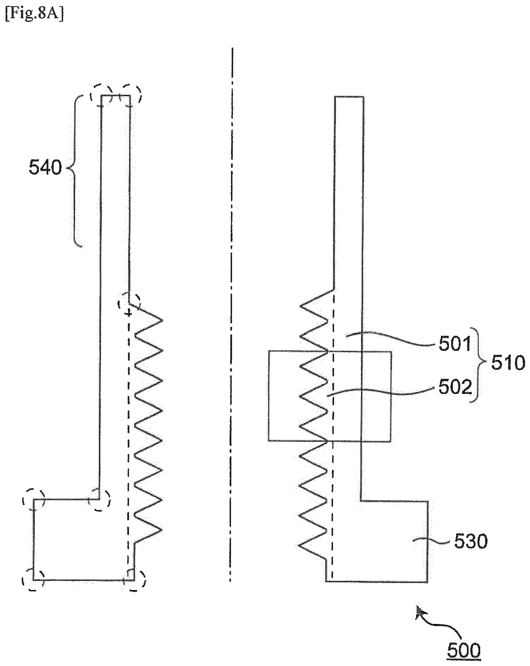

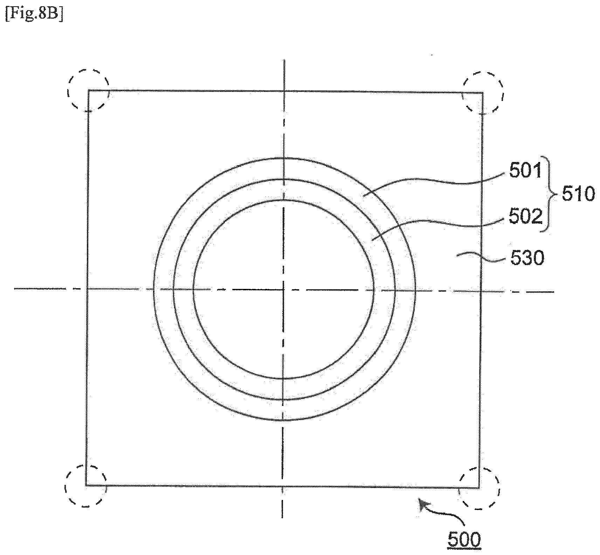

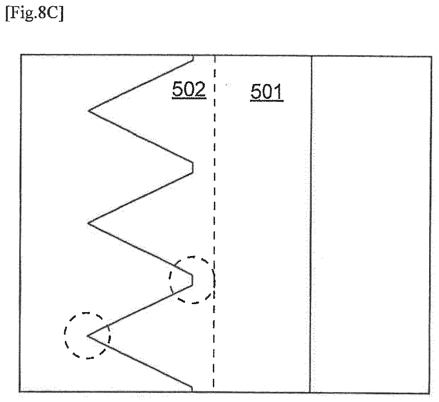

A rivet nut is an example of such a junction part, and is conventionally manufactured by a cutting process. For example, as illustrated in FIGS. 8A to 8C, a rivet nut 500 thus manufactured includes a cylindrical portion 510 and a flange portion 530. The cylindrical portion 510 includes a cylindrical body 501 opening in an axial direction, and a thread ridge 502 provided in an inner circumferential surface of the cylindrical body. The flange portion 530 is provided at one end of the cylindrical body 501. As described above, the rivet nut 500 is manufactured by the cutting process. Accordingly, each of corners indicated by broken-line circles in these figures has an angular shape, such as a right-angled shape, an acute-angled shape, and an obtuse-angled shape. FIG. 8A is a schematic cross-sectional view of a conventional rivet nut. FIG. 8B is a schematic plan view of the conventional rivet nut. FIG. 8C is a partially enlarged view around a thread ridge in FIG. 8A.

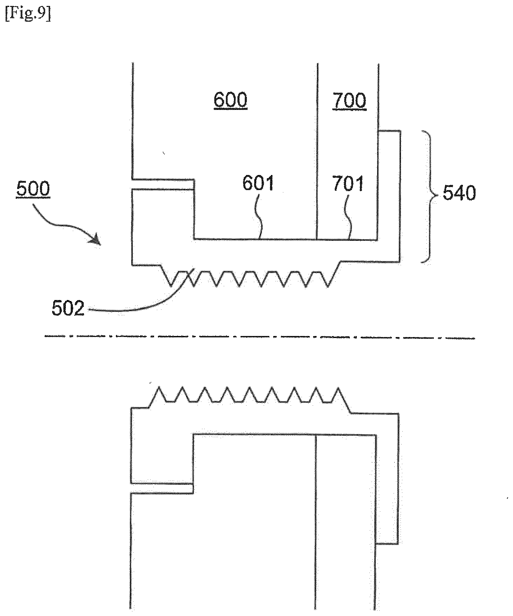

The rivet nut is used in the following manner, for example. As illustrated in FIG. 9, the rivet nut 500 is inserted into through-holes (601, 701) previously provided in an overlapping portion of a resin member 600 and a metal member 700, and a riveting portion 540 is riveted by a dedicated riveting tool (not shown). As a result, junction between the resin member 600 and the metal member 700 is achieved. The thread ridge 502 is used for attaching a desired article (e.g., part such as wiring appliance, wiring part, and electric outlet part). A rivet nut is used not only for attachment to a wall material, but also for assembly of an appliance.

JP 05-033108 A describes a nut member, wherein a flanged part is provided to one end of a cylindrical body, wherein the cylindrical body has a cauking cylindrical part connected to the flanged part and subjected to cauking to hold a periphery of a mounting hole for a plate between the flanged part and the cauking cylindrical part itself. A screw cylindrical part is connected to the above cauking cylindrical part and is provided with a screw in the inside peripheral surface, wherein an intermediate body has the cylindrical body and the flanged part.

JP 2001-317518 A describes a rolled internal thread, the crest of the thread is formed so as to have a fixed width in the thread axis direction, while thread axial both ends of the crest and flanks are connected to each other smoothly via projecting round parts. In this way, the crest is prevented from a crack in connection with a counterpart side external thread.

US 2012/216390 A1 describes a component assembly comprising a sheet metal and a fastener element. A flange has a larger diameter and a shaft of smaller diameter extends away from the flange and merges at its end remote from the flange into a cylindrical rivet section. The fastener element is used with sheet metals with thicknesses in the range of 3 mm and larger. With thin sheet metal parts the sheet metal has a smooth pierced cylindrical opening with a diameter corresponding to the diameter of the shaft.

US 2012/028070 A1 describes a self-piercing nut element having a strength in the range between 700 and 900 MPa which is designed for press fitting into a sheet metal part.

PRIOR ART LITERATURE

PATENT LITERATURE

Patent Literature 1: JP Unexamined Patent Application Publication H5-33108
Patent Literature 2: JP Examined Patent Application Publication H7-10415
Patent Literature 3: JP Examined Patent Application Publication H7-90597
Patent Literature 4: JP Unexamined Patent Application Publication 2004-286217
Patent Literature 5: JP Unexamined Patent Application Publication 2009-30736

## SUMMARY OF INVENTION

### PROBLEMS TO BE SOLVED BY THE INVENTION

The inventors of the disclosure have found that the following problems arise when the conventional rivet nut is used.

After junction of two or more members is achieved by the conventional rivet nut, a part such as a wiring appliance is attached by utilizing the thread ridge 502. At this time, an external thread portion of the part is fitted and fastened to the thread ridge 502 functioning as an internal thread portion. During attachment, excessively large friction is generated between a surface of the external thread portion and a surface of the internal thread portion, and prevents sufficiently smooth fastening between these thread portions in some cases. Even if the rivet nut has a lubricity due to a lubricating oil, this lubricity lowers with dissipation of the lubricating oil during transportation and/or storage of the rivet nut.

An object of the disclosure is to provide a rivet nut capable of sufficiently preventing lowering of a lubricity even after transportation and/or storage and a method for manufacturing the rivet nut.

### MEANS FOR SOLVING PROBLEMS

The underlying problem is solved by the subject-matter according to the independent claims. Preferred embodiments are defined in the dependent claims.

The disclosure relates to a rivet nut according to claim 1.

The disclosure further relates to a method for manufacturing a rivet: nut according to claim 8.

### EFFECTS OF INVENTION

The rivet nut according to the disclosure is adequately excellent in a lubricity.

The rivet nut according to the disclosure can maintain an excellent lubricity for a longer period of time.

### BRIEF DESCRIPTION OF DRAWINGS

FIG. 1A is a schematic cross-sectional view of an example of a rivet nut according to the disclosure.

FIG. 1B is a schematic plan view of the rivet nut illustrated in FIG. 1A.

FIG. 1C is a partially enlarged view around a thread ridge illustrated in FIG. 1A.

FIG. 2 is a photomicrograph around the thread ridge illustrated in FIG. 1A.

FIG. 3 is a partially enlarged view around the thread ridge of the rivet nut according to the disclosure for illustrating a state that recesses provided at a top of the thread ridge retain a lubricating oil.

FIG. 4 is a partially enlarged view around the thread ridge for illustrating a fitting increasing effect produced by refastening the rivet nut according to the disclosure.

FIG. 5 is a schematic cross-sectional view for illustrating a use method of the rivet nut according to the disclosure.

FIG. 6A is a partially enlarged view of an example around the thread ridge when a rolled tapping process is performed under a condition different from a rolled tapping process condition of a method for manufacturing the rivet nut according to the disclosure.

FIG. 6B is a partially enlarged view of another example around the thread ridge when a rolled tapping process is performed under a condition different from the rolled tapping process of the method for manufacturing the rivet nut according to the disclosure.

FIG. 7A is a schematic plan view of a sample precursor used for an evaluation of Example.

FIG. 7B is a schematic perspective view of an experimental device for illustrating an evaluation method of Example.

FIG. 7C is a schematic cross-sectional view of the experimental device for illustrating the evaluation method of Example.

FIG. 8A is a schematic cross-sectional view of a conventional rivet nut.

FIG. 8B is a schematic plan view of the rivet nut illustrated in FIG. 8A.

FIG. 8C is a partially enlarged view around a thread ridge illustrated in FIG. 8A.

FIG. 9 is a schematic cross-sectional view for illustrating a use method of the conventional rivet nut.

MODES FOR CARRYING OUT THE INVENTION

[Rivet nut]

The disclosure provides a rivet nut. In this specification, a term "rivet nut" means a junction part for physically joining two or more members by riveting a part (riveting portion) of the rivet nut. Dimensions of the rivet nut of the disclosure can be appropriately determined in correspondence with purposes of use of a member to be joined. For example, dimensions of the rivet nut may be dimensions corresponding to junction of a wiring part included in a relatively small electronic device (e.g., household electronic device), such as an electric outlet and a switch.

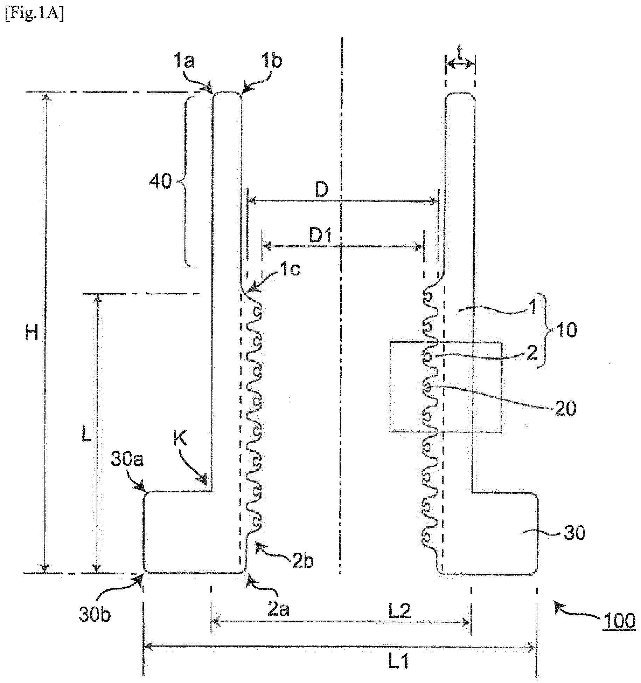

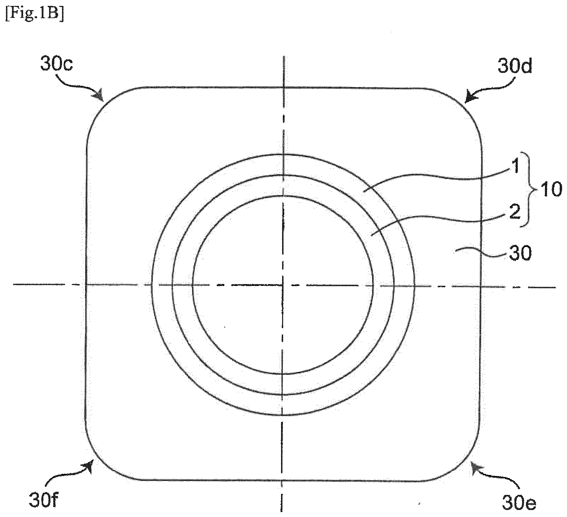

The rivet nut according to the disclosure includes a cylindrical portion and a flange portion provided at one end of the cylindrical portion, and has a shape as illustrated in a schematic cross-sectional view of FIG. 1A and a shape as illustrated in a schematic plan view of FIG. 1B, for example. The cross-sectional view means a view of a state of the rivet nut cut in parallel to an axial direction of the cylindrical portion, i.e., has a similar meaning to a figure in the cross-sectional view. The plan view means a view of a state of the rivet nut placed and viewed from directly above the cylindrical portion in the axial direction, i.e., has a similar meaning to a figure in the plan view. The placed state is such a state that the flange portion of the rivet nut corresponds to a bottom surface. FIG. 1A is a schematic cross-sectional view of an example of the rivet nut according to the disclosure. FIG. 1B is a schematic plan view of the rivet nut illustrated in FIG. 1A.

The rivet nut according to the disclosure will be hereinafter described in detail with reference to the drawings. Respective elements illustrated in the drawings are only schematically shown by way of example for understanding of the disclosure. Accordingly, an appearance, a dimensional ratio and the like may be different from actual ones. In this specification, a "up and down direction", a "left and right direction" and a "front and rear direction" directly or indirectly described in this specification are directions corresponding to a up and down direction, a left and right direction, and a front and back direction in the drawings, respectively. Unless otherwise specified, it is assumed that the same signs or symbols indicate the same members or the same meaning contents.

As illustrated in FIGS. 1A and 1B, a cylindrical portion 10 included in a rivet nut 100 according to the disclosure includes a cylindrical body 1 opening in the axial direction, and a thread ridge 2 provided in an inner circumferential surface of the cylindrical body 1.

The thread ridge 2 may be located at any position as long as the thread ridge is disposed in the inner circumferential surface of the cylindrical body 1. The thread ridge 2 may be provided in a part of the inner circumferential surface, or may be provided in all parts of the inner circumferential surface. More specifically, for example, the thread ridge 2 may be provided in the inner circumferential surface at one end of the cylindrical body 1 where a flange portion 30 is provided as illustrated in FIG. 1A, or may be provided in the inner circumferential surface at the other end opposite to the one end where the flange portion is provided. Alternatively, the thread ridge 2 may be provided on all surface of the inner circumferential surface of the cylindrical body 1. In a preferred embodiment, the thread ridge 2 is provided in the inner circumferential surface at the one end where the flange portion 30 of the cylindrical body 1 is provided as illustrated in FIG. 1A, from a viewpoint of a function of the other end 40 of the cylindrical body as a riveting portion. This preferred embodiment will be hereinafter described. When the thread ridge is provided in the inner circumferential surface of the cylindrical body at the other end opposite to the one end where the flange portion is provided, the cylindrical body located between the thread ridge and the flange portion functions as a riveting portion.

A forming range of the thread ridge 2 in the inner circumferential surface of the cylindrical body 1 may be any range as long as riveting at the riveting portion 40 is achievable, and generally extends from the one end where the flange portion 30 is provided to a position corresponding to a length L described below. The length L is generally in a range from $0.1 \times H$ to $0.8 \times H$, preferably from $0.3 \times H$ to $0.7 \times H$, more preferably from $0.4 \times H$ to $0.6 \times H$, where a total length of the rivet nut is H (mm). The total length H of the rivet nut may be appropriately selected in accordance with purposes of use of a member to be joined. For example, the total length H of the rivet nut for joining a wiring part of a relatively small electronic device such as an electric outlet and a switch is generally in a range from 2 mm to 20 mm, preferably from 5 mm to 15 mm.

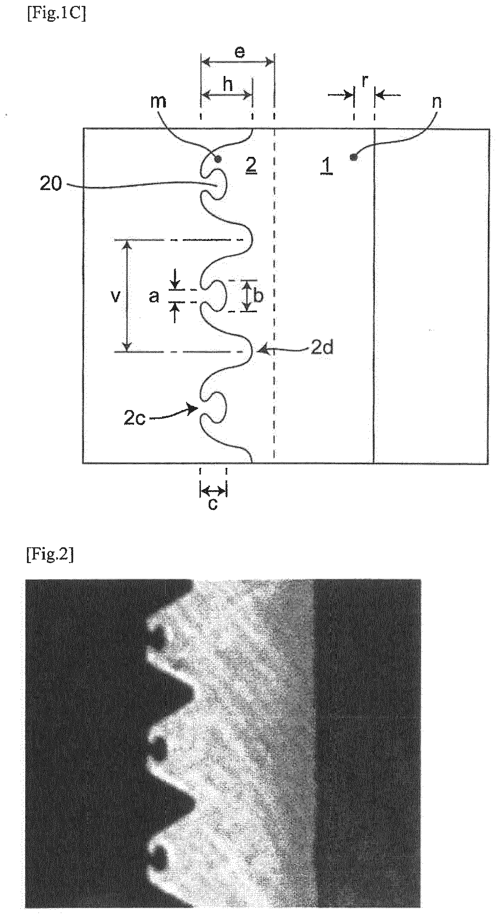

The rivet nut 100 according to the disclosure has recesses 20 at a top of the thread ridge 2. Each of the recesses 20 has a narrowed opening and, that is, has a narrow-mouth shape where an opening is narrowed in the cross-sectional view. For example, as illustrated in FIGS. 1C and 2, each of the recesses 20 has a shape whose axial dimension increases from the opening toward the inside. Examples of a cross-sectional shape of each of the recesses 20 include a what is called sake bottle shape (i.e. bottle shape with narrow neck), and a flask shape. The recesses 20 are continuously formed in a spiral direction at tops of threads formed in a spiral shape on the inner circumferential surface of the cylindrical body 1. The rivet nut 100 according to the disclosure includes the recesses 20 thus formed at the top of the thread ridge 2, and a lubricating oil is retained in the recesses 20. Accordingly, the rivet nut 100 has an excellent lubricity. Thus, friction generated between a surface of the thread ridge 2 of the rivet nut 100 and a surface of an external thread portion of a part such as a wiring appliance decreases in case of attachment of the part by utilizing the thread ridge 2, after junction of two or more members by riveting using the rivet nut 100 of the disclosure. Accordingly, fastening and attachment of the part to the thread ridge of the rivet nut of the disclosure are more smoothly achievable. When the part to be attached to the thread ridge 2 has an external thread portion, the part may be directly attached by fastening the external thread portion and the thread ridge 2 (internal thread portion). When the part to be attached to the thread ridge 2 does not have an external thread portion, a different member may be used as an external thread portion to indirectly attach the part by fastening the external thread portion of the different member and the thread ridge 2 (internal thread portion). When two or more members to be joined by riveting of the rivet nut 100 constitute a wall, attachment to the wall is achieved by attachment of a part to the rivet nut 100. The rivet nut 100 of the disclosure is not necessarily used to achieve junction of two or more members by riveting with the rivet nut 100. For example, the rivet nut 100 of the disclosure may be used only for a purpose of attaching a part such as a wiring appliance. For example, riveting by the rivet nut 100 of the disclosure may be performed for one member, and a part such as a wiring appliance may be attached by utilizing the thread ridge 2 of the rivet nut 100. Furthermore, when the rivet nut 100 of the disclosure as described above is used, friction between the surface of the thread ridge 2 of the rivet nut 100 and a surface of an external thread portion of a different part decreases. As a result, assembly of an appliance is achievable with more sufficient smoothness. FIG. 1C is a partially enlarged view around the thread ridge illustrated in FIG. 1A. FIG. 2 is a photomicrograph around the thread ridge illustrated in FIG. 1A.

Lubricating oil is dissipated during transportation and/or storage of the rivet nut. Accordingly, even if the lubricating oil is applied to a conventional rivet nut, lowering of a lubricity resulting from transportation and/or storage is unavoidable. According to the disclosure, the lubricating oil is retained and held in the recesses 20 each having a narrow-mouth shape. In this case, dissipation of the lubricating oil during transportation and/or storage is avoidable, and therefore more sufficient prevention of lowering of a lubricity is achievable. Accordingly, the rivet nut of the disclosure can maintain an excellent lubricity for a longer period of time. Dissipation of the lubricating oil means diffusion and decrease of the lubricating oil during transportation and storage of the rivet nut. Diffusion of the lubricating oil includes not only scattering of the lubricating oil into the atmosphere or shifting the lubricating oil from the rivet nut surface to other members such as a transport box by vibration during transportation of the rivet nut, but also diffusion caused by evaporation of the lubricating oil during transportation and storage.

An axial dimension a of the opening of the recess 20, and a maximum inside axial dimension b of the recess 20 (see FIG. 1C) generally satisfies a relational expression (1-i), preferably a relational expression (1-ii), more preferably a relational expression (1-iii), further preferably a relational expression (1-iv), and most preferably a relational expression (1-v) from a viewpoint of characteristics of the lubricating oil retention described below.

$$a/b < 1 \qquad (1\text{-}i)$$

$$0.1 \leq a/b < 1 \qquad (1\text{-}ii)$$

$$0.2 \leq a/b \leq 0.9 \qquad (1\text{-}iii)$$

$$0.3 \leq a/b \leq 0.9 \qquad (1\text{-}iv)$$

$$0.3 \leq a/b \leq 0.7 \qquad (1\text{-}v)$$

In these relational expressions, a/b is preferably in a range from 0.2 to 0.9, more preferably from 0.3 to 0.9, further preferably from 0.50 to 0.66, from a viewpoint of balance between strength of the thread ridge (screw fastening strength) and the characteristics of the lubricating oil retention.

The axial dimension a of the opening of the recess 20 is an average value of the axial dimensions of the openings at ten recesses randomly selected in a photomicrograph of a cross section. The recesses to be measured usually do not include the uppermost recess and the lowermost recess in all the recesses in the photomicrograph. The axial dimension a of the opening of the recess 20 may be appropriately selected in accordance with purposes of use of a member to be joined. For example, the axial dimension a of the opening of the recess 20 included in the rivet nut for joining a wiring part of a relatively small electronic device, such as an electric outlet and a switch, is generally in a range from 0.01 mm to 0.5 mm, preferably from 0.02 mm to 0.5 mm, and more preferably from 0.05 mm to 0.2 mm.

The maximum inside axial dimension b of the recess 20 is an average value of the maximum inside axial dimensions b of the ten recesses randomly selected in the photomicrograph of the cross section. The recesses to be measured usually do not include the uppermost recess and the lowermost recess in all the recesses in the photomicrograph. The maximum inside axial dimension b of the recess 20 may be appropriately selected in accordance with purposes of use of a member to be joined. For example, the maximum inside axial dimension b of the recess 20 included in the rivet nut for joining a wiring part of a relatively small electronic device such as an electric outlet and a switch is generally in a range from 0.03 mm to 0.6 mm, preferably from 0.05 mm to 0.6 mm, and more preferably from 0.06 mm to 0.3 mm.

A depth c of the recess 20 (see FIG. 1C) may be appropriately selected in accordance with purposes of use of a member to be joined. For example, the depth c of the recess 20 included in the rivet nut for joining a wiring part of a relatively small electronic device such as an electric outlet and a switch is generally in a range from 0.02 mm to 0.25 mm, and preferably from 0.05 mm to 0.15 mm.

The depth c of the recess 20 is an average depth of the ten recesses randomly selected in the photomicrograph of the cross section. The recesses to be measured usually do not include the uppermost recess and the lowermost recess in all the recesses in the photomicrograph.

A height h of each thread (see FIG. 1C) may be appropriately selected in accordance with purposes of use of a member to be joined. For example, the height h of each thread of the rivet nut for joining a wiring part included in a relatively small electronic device such as an electric outlet and a switch may be determined generally in conformity with screw standards.

The height h of each thread is an average height of ten threads randomly selected in the photomicrograph of the cross section. The threads to be measured usually do not include the uppermost thread and the lowermost thread in all the threads in the photomicrograph.

A pitch v of each thread (see FIG. 1C) may be appropriately selected in accordance with purposes of use of a member to be joined. For example, the pitch v of each thread of the rivet nut for joining a wiring part included in a relatively small electronic device such as an electric outlet and a switch may be determined generally in conformity with screw standards.

The pitch v of each thread is an average pitch of ten threads randomly selected in the photomicrograph of the cross section. The threads to be measured usually do not include the uppermost thread and the lowermost thread in all the threads in the photomicrograph.

According to the rivet nut of the disclosure, the thread ridge 2 generally has a hardness higher than a hardness of the cylindrical body 1. The rivet nut of the disclosure has an excellent strength at the thread ridge, and therefore riveting at the riveting portion 40 is more sufficiently achievable using a riveting tool. Accordingly, junction of two or more parts is achievable with more sufficient strength by using the rivet nut of the disclosure.

Generally, a hardness p of the screw thread ridge 2 and a hardness q of the cylindrical body 1 satisfy a relational expression (2-i), and preferably a relational expression (2-ii), more preferably a relational expression (2-iii) from a viewpoint of more sufficient screw fastening strength.

$$1 < p/q \qquad (2\text{-}i)$$

$$1.1 \leq p/q \qquad (2\text{-}ii)$$

$$1.2 \leq p/q \qquad (2\text{-}iii)$$

According to the disclosure, it is preferable that an upper limit of p/q is a highest possible value. However, for example, the upper limit of p/q is typically set to 2, particularly 1.5, when the rivet nut is made of an aluminum alloy.

The hardness is measured directly from a cross section of the rivet nut based on a micro-Vickers hardness test. The micro-Vickers hardness test can be carried out in conformity with Japanese Industrial Standard (JIS) Z 2244 at a test load of 0.1 kgf using a micro-Vickers hardness tester (made by Mitutoyo Corporation; HM-100). Each hardness of the thread ridge 2 and the cylindrical body 1 is an average hardness at ten positions randomly selected in the cross section of the rivet nut. A concept of the thread ridge 2 includes not only the threads but also a region directly below the threads. A thickness e of the thread ridge 2 (see FIG. 1C) is generally in a range from $1.1 \times h$ to $1.3 \times h$. More specifically, the hardness of the thread ridge 2 is an average hardness at measurement points m of the ten threads randomly selected and directly beside (directly above in FIG. 1C) the recesses 20. The threads to be measured usually do not include the uppermost thread and the lowermost thread in all the threads. The hardness of the cylindrical body 1 is an average hardness at ten measurement points n each located at a distance r of 0.2 mm from an outer surface of the cylindrical body 1 (see FIG. 1C).

The hardness p of the thread ridge 2 and the hardness q of the cylindrical body 1 are dependent on a material constituting the rivet nut. For example, when the rivet nut is made of an aluminum alloy, the hardness p of the thread ridge 2 is generally in a range from 30 Hv to 180 Hv, such as 117 Hv. In a similar case, the hardness q of the cylindrical body 1 is generally in a range from 20 Hv to 120 Hv, such as 93 Hv.

According to the rivet nut of the disclosure, it is preferable that each corner has a radiused shape. More specifically, when a rivet nut is manufactured by a cutting process, each corner has an angled shape. According to the disclosure, however, each corner preferably has a radiused shape. Particularly, each corner of the flange portion 30 preferably has a radiused shape. When each corner has a radiused shape, mutual scratching between respective corners of the rivet nuts of the disclosure is avoidable during transportation. Accordingly, junction of two or more parts using the rivet nut of the disclosure is achievable with more sufficient strength. The radiused shape means a rounded shape, and includes a what is called a round chamfered shape (i.e., a shape chamfered to be radiused or rounded). The angular shape means any shape other than a rounded shape, including a right-angled shape, an acute-angled shape, and an obtuse-angled shape. The rivet nut manufactured by a cutting process has angled-shaped corners at the flange portion and the like. In this case, the rivet nut may be damaged by mutual scratching between the corners during transportation.

According to the rivet nut of the disclosure, all of the corners preferably have radiused shapes except for a corner K (see FIG. 1A) at a boundary between the outer surface of the cylindrical body 1 and the flange portion. More specifically, the corners preferably having radiused shapes are the following portions.

- corner portions 1a and 1b at outer circumferential edge and inner circumferential edge, respectively, of the other end of the cylindrical body 1 in the cross-sectional view (see FIG. 1A); a radius of curvature of each radiused shape of these corner portions generally ranges from 0.01 mm to 1 mm.
- a corner portion 1c at a boundary between the cylindrical body 1 and the thread ridge 2 in the cross-sectional view (see FIG. 1A); a radius of curvature of the radiused shape of this corner portion generally ranges from 0.02 mm to 1 mm.
- corner portions 2a and 2b at the one end of the thread ridge 2 in the cross-sectional view (see FIG. 1A); a radius of curvature of each radiused shape of these corner portions generally ranges from 0.02 mm to 1 mm.
- corner portions 30a and 30b at the outer circumferential edge of the flange portion 30 in the cross-sectional view (see FIG. 1A); a radius of curvature of each radiused shape of these corner portions generally ranges from 0.02 mm to 2 mm.
- corner portions 30c, 30d, 30e, and 30f at four corners of the flange portion 30 in the plan view (see FIG. IB); a radius of curvature of each radiused shape of these corner portions generally ranges from 0.1 mm to 2 mm.
- corner portions 2c and 2d at the top and root of the thread ridge 2, respectively, in the cross-sectional view (see FIG. 1C); a radius of curvature of each radiused shape of these corner portions is generally determined in accordance with the tap tool.

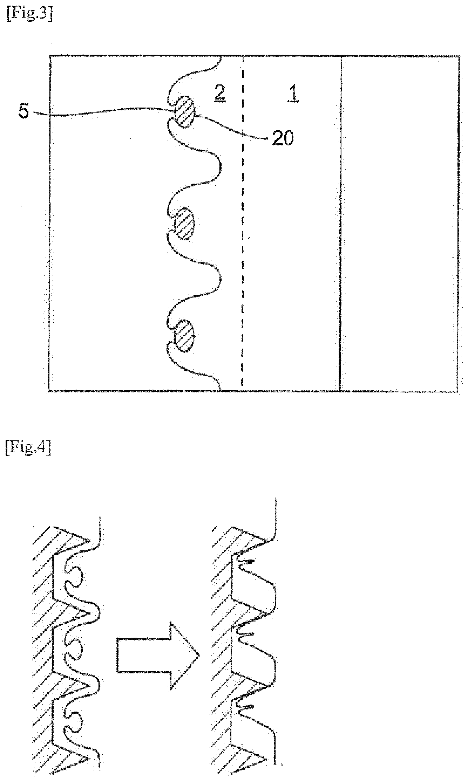

According to the rivet nut of the disclosure, the recesses 20 preferably retain a lubricating oil 5 as illustrated in FIG. 3. More specifically, the recesses 20 preferably retain the lubricating oil in spaces formed by the recesses 20. The lubricating oil is preferably retained in these spaces. Since the recesses 20 retain the lubricating oil 5, as described above, friction between the surface of the thread ridge 2 and the surface of the external thread portion of the riveting tool decreases during use of the rivet nut 100 of the disclosure, and dissipation of the lubricating oil during transportation and/or storage of the rivet nut is avoidable in order to prevent a lowering of a lubricity more sufficiently. FIG. 3 is a partially enlarged view around the thread ridge for illustrating a state that each of the recesses at the top of the thread ridge included in the rivet nut of the disclosure retains the lubricating oil.

The state that the recesses 20 retain the lubricating oil 5 means not only a state that the recesses 20 are filled with the lubricating oil as illustrated in FIG. 3, but also a state that the lubricating oil adheres to the inner surfaces of the recesses 20, and a state of a combination of these states.

The types of the lubricating oil 5 may be any types of lubricating oil as long as reduction of friction is achievable. For example, the lubricating oil 5 may be the lubricating oil allowed to be used in a manufacturing process of the rivet nut, such as forge processing oil, rolled tapping processing oil, and a mixture of these oils.

A material constituting the rivet nut of the disclosure is not particularly limited. Examples of the material include metal materials such as brass, aluminum, aluminum alloy, copper, copper alloy, iron, iron alloy, and stainless steel. The material constituting the rivet nut is preferably an aluminum alloy from a viewpoint of weight reduction of the rivet nut and variable cost reduction achieved by small specific gravity, and reduction of processing force (simplified riveting process) and simplification of equipment achieved by low yield stress. Variable cost reduction means weight reduction of a material to be used.

The aluminum alloy is an alloy containing aluminum as a main component. A content rate of aluminum in the aluminum alloy is generally 50% by weight or more, preferably 70% by weight or more, more preferably 90% by weight or more, and further preferably 95% by weight or more.

The aluminum alloy constituting the rivet nut of the disclosure is preferably a non-free-cutting aluminum alloy from a viewpoint of forming recesses at the top of the thread ridge. Aluminum alloys are generally classified into free-cutting aluminum alloys and non-free cutting aluminum alloys. Free-cutting aluminum alloys are aluminum alloys containing free-cutting material for improving a cuttability. Non-free-cutting aluminum alloys are aluminum alloys containing no free-cutting material, or containing only a small amount of free-cutting material, if any. Examples of the free-cutting material include lead, bismuth, sulfur, and tin. A content of the free-cutting material in the non-free-cutting aluminum alloy is generally smaller than 0.4% by weight, preferably 0.2% by weight or less, and more preferably 0.1% by weight or less. A lower limit of the content of the free-cutting material is generally 0% by weight.

The cylindrical portion 10 of the rivet nut of the disclosure, particularly the outer circumferential surface of the cylindrical body 1 has a cylindrical shape in FIGS. 1A and 1B. However, the outer circumferential surface of the cylindrical body 1 may have any shape as long as the inner circumferential surface including the thread ridge 2 has a cylindrical shape. For example, the outer circumferential surface may have a polygonal tubular shape such as a triangle-tubular shape, a square-tubular shape, a pentagonal-tubular shape, and a hexagonal-tubular shape.

As illustrated in FIG. 1B, the flange portion 30 included in the rivet nut of the disclosure has a square shape in the plan view. However, the flange portion 30 may have a polygonal shape such as a triangular shape, pentagonal shape, and hexagonal, or may have a circular shape, for example.

An outer circumference diameter L1 of the flange portion 30 included in the rivet nut of the disclosure, and an outer circumference diameter L2 and a thickness t (see FIG. 1A) of the cylindrical portion 10 may be appropriately selected in accordance with purposes of use of a member to be joined. For example, the following ranges may be adopted for the rivet nut which joins a wiring part of a relatively small electronic device such as an electric outlet and a switch.

The outer circumference diameter L1 of the flange portion 30:2 mm to 10 mm, preferably 4 mm to 6 mm. The outer diameter L2 of the cylindrical portion 10: 1 mm to 9 mm, preferably 3 mm to 5 mm. The thickness t of the cylindrical portion 10: 0.1 mm to 2 mm, preferably 0.3 mm to 1 mm.

The rivet nut 100 according to the disclosure includes the recesses 20 at the top of the thread ridge 2. Accordingly, as illustrated in FIG. 4, a part such as a wiring appliance can be firmly fixed to a wall or the like by crushing of the recesses 20 at the time of refastening. Moreover, an appliance can be assembled with stronger fixing force (or fastening force). FIG. 4 is a partially enlarged view around the thread ridge for illustrating a fitting increasing effect at the time of refastening of the rivet nut of the disclosure.

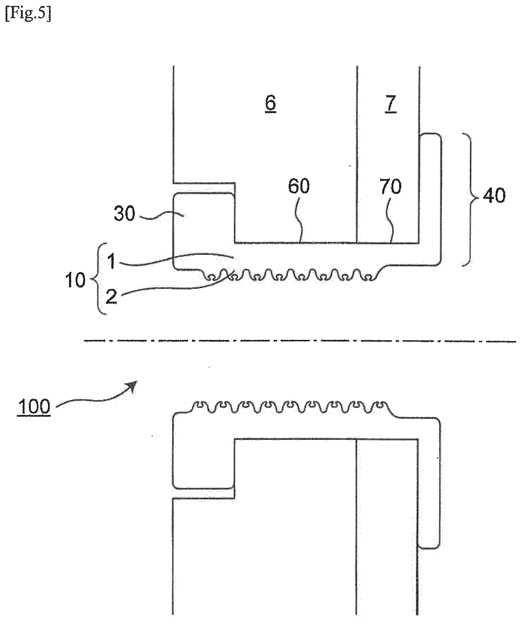

The rivet nut 100 according to the disclosure is used in the following manner, for example. As illustrated in FIG. 5, the rivet nut 100 is inserted into through-holes (60, 70) previously formed in an overlapping portion of a resin member 6 and a metal member 7, and a riveting portion 40 is riveted by a riveting tool (not shown). As a result, junction between the resin member 6 and the metal member 7 is achieved. Thereafter, a part such as a wiring appliance is fastened by utilizing the thread ridge 2 of the rivet nut 100 to attach the part to a desired installation place such as a wall. At the time of fastening the part to the thread ridge 2, the part can be more firmly fixed by refastening. In another embodiment, at the time of assembly of an appliance using the rivet nut of the disclosure, the part can be more firmly fixed by refastening.

A member allowed to be joined by the rivet nut 100 is not particularly limited. For example, two or more members selected from the group consisting of a resin member (plastic member), a metal member, a glass member, and a wooden member can be joined by using the rivet nut 100 of the disclosure. The rivet nut 100 of the disclosure is not necessarily used for joining two or more members. The member into which the rivet nut 100 of the disclosure is inserted may be a single member.

[Method for manufacturing rivet nut]

The rivet nut according to the disclosure can be manufactured by the following method.

(Rolled tapping process)

A rolled tapping process is performed to form a thread ridge 2 while forming a recess 20 at a top of the thread ridge 2. More specifically, the recesses 20 are formed by the rolled tapping process so that the axial dimensions (a, b, and others in FIG. 1C) of the recesses 20 increase from the openings toward the inside. As described above, each of the recesses 20 is a recess having a narrow-mouth shape in the cross-sectional view.

The rolled tapping process is one of processing methods for forming threads and means a method in which an inner circumferential portion of a cylindrical hole (pilot hole) is plastically deformed by using a rolled tap (rolled tapping tool), portions constituting roots are crushed and extruded portions by crushing are gathered and raised to form threads.

According to the disclosure, the rolled tapping process is performed under a particular condition. The particular condition is such a condition that the recesses 20 each having a narrow-mouth shape can be formed. For example, the particular condition include adjustment of a ratio of a diameter of the rolled tap (rolled tapping tool) used for the rolled tapping process and a diameter of the pilot hole for which threads are formed in an inner circumferential surface of the pilot hole.

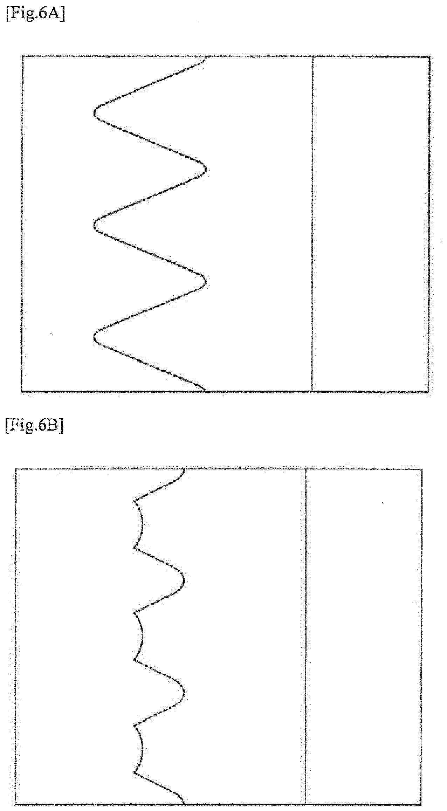

For example, the recesses described above can be formed at the top of the thread ridge by adjusting the ratio between the diameter of the rolled tap (rolled tapping tool) and the diameter of the pilot hole within an appropriate range. When the diameter of the pilot hole is too small with respect to the diameter of the rolled tap (rolled tapping tool), an excessively large amount of the portions constituting roots are crushed and extruded at the time of the rolled tapping process. In this case, no recess is formed at the top as illustrated in FIG. 6A. When the diameter of the pilot hole is too large with respect to the diameter of the rolled tap (rolled tapping tool), an excessively small amount of the portions constituting roots are crushed and extruded at the time of the rolled tapping process. In this case, no recess having a narrow mouth shape is formed at the top as illustrated in FIG. 6B. Each of FIGS. 6A and 6B is a partially enlarged view of an example around the thread ridge when the rolled tapping process is performed under a condition different from the rolled tapping process condition in the method for manufacturing the rivet nut according to the disclosure.

More specifically, when the rolled tapping process is performed using a rolled tap (rolled tapping tool) for M3, the recesses 20 each having a narrow mouth shape in the cross-sectional view can be formed at the top of the thread ridge 2 by setting the diameter of the pilot hole to a value in a range from 2.750 mm to 2.820 mm. In this case, the diameter of the pilot hole preferably ranges from 2.764 mm to 2.820 mm, more preferably from 2.810 mm to 2.820 mm from a viewpoint of further improving strength for fastening with the external thread. The rolled tap (rolled tapping tool) for M3 means a rolled tap (rolled tapping tool) for forming an internal thread for an M3 thread (external thread portion) specified in JIS B 0205-1. The inside diameter of the threads of the M3 internal thread in conformity with JIS standard ranges from 2.459 mm to 2.599 mm.

The rolled tapping process is performed for an inner circumferential surface of a cylindrical body of a rivet nut precursor. The rivet nut precursor for which the rolled tapping process is performed has the pilot hole for which the thread ridge is formed in the inner circumferential surface of the pilot hole. Specifically, the rivet nut precursor has a structure similar to the rivet nut of the disclosure except that the thread portion has not been formed. More specifically, the rivet nut precursor has a cylindrical portion constituted by a cylindrical body opening in the axial direction, and a flange portion formed at one end of the cylindrical body.

The thread ridge is preferably provided, by using the rolled tapping process, in the inner circumferential surface of the cylindrical body of the rivet nut precursor at the one end where the flange portion is provided.

The rolled tapping process causes work-hardening associated with plastic deformation, whereby the thread ridge obtains a higher hardness than a hardness of the cylindrical body as described above.

During the rolled tapping process, the lubricating oil usually adheres to the surface of the rivet nut precursor (particularly inner circumferential surface of cylindrical body). Accordingly, the rolled tapping process is performed to cause the inner surface of each of the recesses 20 to retain the lubricating oil. In a preferred embodiment, the lubricating oil moves from the openings toward the insides of the recesses due to a capillary phenomenon in accordance with shaping of the recesses into narrow mouth shapes during the rolled tapping process. As a result, the recesses come to retain the lubricating oil, more preferably come to be filled with the lubricating oil. The lubricating oil may be any lubricating oil used in the manufacturing process of the rivet nut precursor, a lubricating oil used in the rolled tapping process (e.g., rolled tapping processing oil), or a mixture of these oils.

According to the rolled tapping process, each of the following corner portions comes to have a radiused shape as a result of formation of threads based on plastic deformation as described above:

- a corner portion 1c (see FIG. 1A) at the boundary between the cylindrical body 1 and the thread ridge 2 in the cross-sectional view;
- corner portions 2a and 2b (see FIG. 1A) at the one end of the thread ridge 2 in the cross-sectional view; and
- corner portions 2c and 2d (see FIG. 1C) at the top and the root of the thread ridge 2, respectively, in the cross-sectional view.

According to the disclosure, one or more processes selected from a group constituted by what is called a shot peening process, hard plating process, ceramic coating process, and ceramic spray process may be performed for the thread ridge of the rivet nut after completion of the rolled tapping process. As a result, a hardness of the thread ridge further increases, thread fastening torque can further rise (increase), and a part such as a wiring appliance can be more firmly fixed. In addition, an appliance can be assembled with further strong fixing force (or fastening force).

(Method for manufacturing rivet nut precursor)

The rivet nut precursor may be manufactured by any processing methods, such as forging process and cutting process. The rivet nut precursor is preferably produced by forging process from a viewpoint of forming radiused corners of the rivet nut, particularly radiused corners of the flange portion.

The forging process includes a correction process, extrusion process, flange forging process, and perforation process.

The correction process is a process of flattening a cutting droop of a metal material constituting the rivet nut, and correcting so that an approximate outer circumferential surface shape of the cylindrical portion can be produced.

The extrusion process is a process of forming a hole by extrusion in the metal material subjected to the correction process so that an approximate inner circumferential surface shape of the cylindrical portion can be produced.

The flange forging process is a process of forging the metal material subjected to the extrusion process so that an approximate shape of the flange portion can be produced. The forging may be either cold forging or hot forging.

The perforation process is a process of shearing the metal material subjected to the flange forging process so that a hollow portion opening in the axial direction of the cylindrical portion can be produced.

The forging process is performed to form the a radiused shape of each of the following corner portions, particularly the corner portions of the flange portion.

- corner portions 1a and 1b at the outer circumferential edge and the inner circumferential edge of the opposite end of the cylindrical body 1 in the cross-sectional view (see FIG. 1A);
- corner portions 30a and 30b at the outer circumferential edge of the flange portion 30 in the cross-sectional view (see FIG. 1A);
- corner portions 30c, 30d, 30e, and 30f at the four corners of the flange portion 30 in the plan view (see FIG. 1B).

When the flange portion has a polygonal shape in the plan view, the radiused corners of the flange portion in the plan view in the forging process allow the rivet nut to easily and appropriately idle during use of the rivet nut. As a result, a torque value produced by rotation of the rivet nut appropriately decreases. In this case, the rivet nut idles before breakage. Accordingly, breakage of the rivet nut is avoidable.

The rivet nut precursor is preferably made of an aluminum alloy similarly to the rivet nut described above. The aluminum alloy is preferably a non-free-cutting aluminum alloy similarly to the rivet nut described above.

By adopting the forging process to manufacture the rivet nut precursor, a material yield ratio is improved and therefore material losses considerably decrease.

When the rivet nut precursor is manufactured by the forging process, streak marks parallel to the axial direction (total length direction) of the cylindrical body usually remain on the outer circumferential surface of the cylindrical body 1 of the obtained rivet nut 100. The streak marks generated in the axial direction are surface scratches of a certain type. Generation of these streak marks need not be prevented, and is caused by contact with a metal mold during forging process. On the other hand, when the rivet nut precursor is manufactured by cutting process, streak marks remain in the circumferential direction (outer circumferential direction of cylindrical body) on the outer circumferential surface of the cylindrical body of the obtained rivet nut. The streak marks generated in the circumferential direction are also surface scratches of a certain type. Generation of these streak marks need not be prevented, and caused by cutting during a cutting process particularly when the cylindrical body has a cylindrical shape.

[Example]

<Experimental Example 1>

(Production of Sample 1)

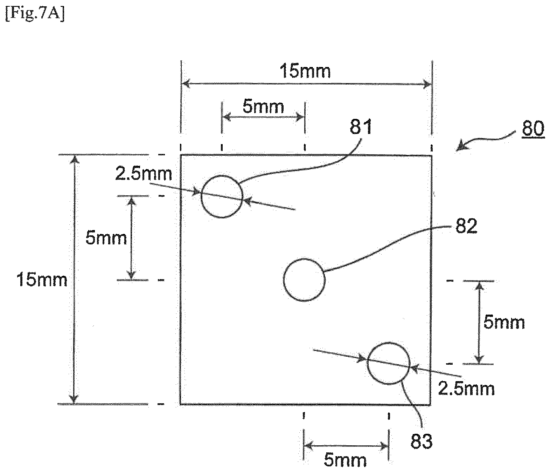

As illustrated in FIG. 7A, three holes (81, 82, 83) were provided in a non-free-cutting aluminum alloy sheet (content rate of aluminum: 95% by weight or more, content rate of free-cutting material: 0% by weight, thickness: 3 mm). In FIG. 7A, reference numerals "81" and "83" are holes for fixing a sample to a jig, while "82" is a pilot hole for forming a thread ridge. Diameters of the pilot hole 82 are shown in Table 1. A rolled tapping process was performed for the pilot hole 82 of the non-free-cutting aluminum alloy sheet using a rolled tap (rolled tapping tool) for M3 to obtain Sample 1. Respective dimensions of the thread ridge thus formed are shown in Table 1. FIG. 7A is a schematic plan view of a sample precursor used for evaluation of Example.

(Production of Samples 2 to 10)

Samples 2 to 10 were obtained by a method similar to the manufacturing method of Sample 1 except that the diameter of the pilot hole was changed as shown in Table 1.

(Evaluation)

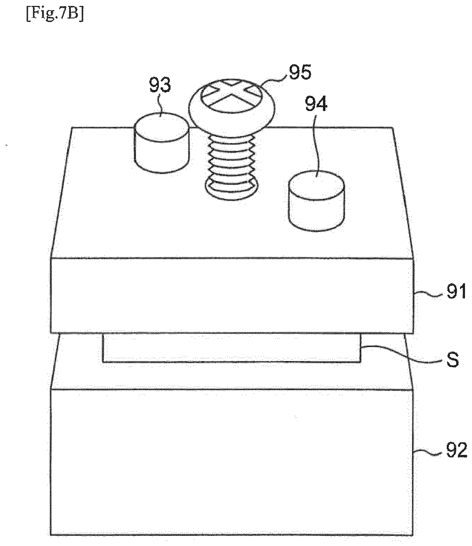

As illustrated in FIG. 7B, Sample S was sandwiched between an upper jig 91 and a lower jig 92, and fixed by fixing screws 93 and 94. An M3 screw 95 was inserted, and fastened with a torque screwdriver. A torque value was measured and a breakage state was observed at the time of breakage of the M3 screw 95. FIG. 7B is a schematic perspective view of an experimental device for illustrating an evaluation method of Example.

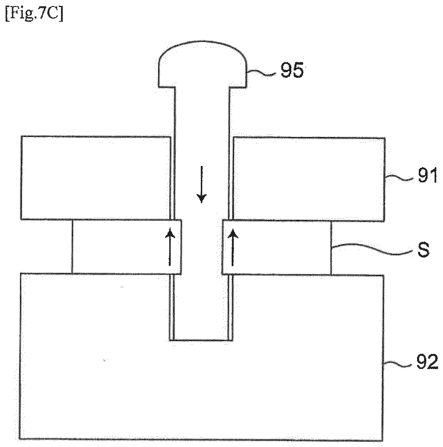

More specifically, as illustrated in FIG. 7C, the M3 screw 95 is fastened, and finally stopped by collision between the bottom surface of the M3 screw 95 and a wall. With further fastening in this state, Sample S is raised upward. Movement of Sample S is stopped by the jigs 91 and 92, wherefore a load is imposed only on the threads. Finally, only the threads of Sample S were damaged, or a screw head of the M3 screw 95 was broken. Breakage of the screw head refers to a state that the screw head has been twisted off. FIG. 7C is a schematic cross-sectional view of an experimental device for illustrating an evaluation method of Example.

A torque value was evaluated based on following criteria. A reference of a torque value generally determined to produce no practical problem is 1.0 Nm.

S rank: 1.5 Nm or larger;
A rank: 1.4 Nm or larger and smaller than 1.5 Nm;
B rank: 1.3 Nm or larger and smaller than 1.4 Nm (producing no practical problem);
C rank: smaller than 1.3 (producing practical problem).

(Recess shape)

A photomicrograph of a cross section was taken for each of samples. Each shape of recesses was observed from the photomicrograph. In this case, "FIG. 1C" is given to a sample which produces recesses each having a shape similar to the shape in FIG. 1C, "FIG. 6A" is given to a sample which produces recesses each having a shape similar to the shape in FIG. 6A, and "FIG. 6B" is given to a sample which produces recesses each having a shape similar to the shape in FIG. 6B.

(Measurement of dimensions of thread ridge)

A photomicrograph of a cross section was taken for each of samples. The axial dimension a of the opening, the maximum inside axial dimension b, and the depth c (see FIG. 1C) in the recess 20, and the height h and the pitch v (see FIG. 1C) of the thread were measured from the photomicrograph by using the method described above.

[Table 1]

| Sample number | Diameter of pilot hole (Detailed diameter) (mm) | Torque value (Nm) | Breakage state | Recess shape | a (mm) | b (mm) | a/b | c (mm) | h (mm) | v (mm) | Nominal diameter D (mm) | Inside diameter D1 (mm) |
|---|---|---|---|---|---|---|---|---|---|---|---|---|
| 1 (for comparison) | φ2.7(2.710) | B | Screw head breakage | FIG. 6A | 0.000 | 0.000 | - | 0 | 0.339 | 0.500 | 3.062 | 2.387 |
| 2 (for comparison) | φ2.7(2.712) | A | Screw head breakage | FIG. 6A | 0.000 | 0.000 | - | 0 | 0.346 | 0.504 | 3.072 | 2.386 |
| 3 (for comparison) | φ2.7(2.708) | A | Screw head breakage | FIG. 6A | 0.000 | 0.000 | - | 0 | 0.340 | 0.501 | 3.069 | 2.3 89 |
| 4 (invention) | φ2.75(2.763) | B | Screw head breakage | FIG. 1C | 0.017 | 0.067 | 0.254 | 0.088 | 0.294 | 0.499 | 3.074 | 2.490 |
| 5 (invention) | φ2.75(2.765) | A | Screw head breakage | FIG. 1C | 0.021 | 0.059 | 0.356 | 0.085 | 0.291 | 0.502 | 3.075 | 2.499 |
| 6 (invention) | φ2.8(2.807) | A | Screw head breakage | FIG. 1C | 0.085 | 0.125 | 0.680 | 0.102 | 0.248 | 0.506 | 3.077 | 2.581 |
| 7 (invention) | φ2.8(2.812) | S | Screw head breakage | FIG. 1C | 0.114 | 0.178 | 0.640 | 0.098 | 0.261 | 0.497 | 3.086 | 2.600 |
| 8 (invention) | φ2.8(2.806) | A | Screw head breakage | FIG. 1C | 0.126 | 0.143 | 0.881 | 0.099 | 0.247 | 0.500 | 3.091 | 2.607 |
| 9 (for comparison) | φ2.85(2.859) | C | Only thread breakage | FIG. 6B | 0.230 | 0.230 | 1 | 0.075 | 0.185 | 0.502 | 3.088 | 2.678 |
| 10 (for comparison) | φ2.85(2.853) | C | Only thread breakage | FIG. 6B | 0.231 | 0.231 | 1 | 0.056 | 0.173 | 0.494 | 3.088 | 2.699 |

12

EP 3 412 923 B1

<Experimental Example 2> (Manufacture of rivet nut)

(Example 1)

A correction process, extrusion process, extrusion process, flange forging process, and perforation process were performed as a forging process using a non-free-cutting aluminum alloy (aluminum content rate: 95% by weight or larger, free-cutting material content rate: 0% by weight) to obtain a rivet nut precursor. A rolled tapping process was performed for the inner circumferential surface of the cylindrical body of the rivet nut precursor by using a rolled tap (rolled tapping tool) for M3. The recesses 20 were formed at the top of the thread ridge during formation of the thread ridge 2 to obtain the rivet nut illustrated in FIGS. 1A to 1C and 2.

A photomicrograph of a cross section of the rivet nut was taken. It was confirmed that each of the recesses had a shape similar to the narrowed mouth shape (narrow mouth shape) illustrated in FIG. 1C based on observation of the photomicrograph. Respective dimensions of the recesses 20 and threads were measured by the method described above based on the photomicrograph.

Axial dimension a of opening: 0.075 mm
Maximum inside axial dimension b: 0.117 mm
Recess depth c: 0.090 mm
Thread height h: 0.211 mm
Thread pitch v: 0.491 mm

A state that the insides of the recesses 20 of the rivet nut were filled with oil was visually confirmed. The oil was a mixture of forge processing oil and rolled tapping processing oil.

Respective dimensions of the rivet nut were measured.

Total length H: 8.187 mm
Outer circumferential diameter L1 of flange portion 30: 4.922 mm
Outer circumferential diameter L2 of cylindrical portion 10: 4.155 mm
Thickness t: 0.473 mm

The hardness p of the thread ridge 2 and the hardness q of the cylindrical body 1 were measured by the method described above.

Hardness p of thread ridge 2: 116.7 Hv
Hardness q of cylindrical body 1: 92.6 Hv

$$p/q = 1.26$$

Each of the following corner portions of the rivet nut had a radiused shape.

- corner portions 1a and 1b at the outer circumferential edge and the inner circumferential edge of the opposite end of the cylindrical body 1 in the cross-sectional view (see FIG. 1A); a radius of curvature of each radiused shape of these corner portions was 0.014 mm.
- a corner portion 1c at a boundary between the cylindrical body 1 and the thread ridge 2 in the cross-sectional view (see FIG. 1A); a radius of curvature of the radiused shape of this corner portion was 0.212 mm.
- corner portions 2a and 2b at the one end of the thread ridge 2 in the cross-sectional view (see FIG. 1A); a radius of curvature of each radiused shape of these corner portions was 0.413 mm.
- corner portions 30a and 30b at the outer circumferential edge of the flange portion 30 in the cross-sectional view (see FIG. 1A); a radius of curvature of each radiused shape of these corner portions was 0.583 mm.
- corner portions 30c, 30d, 30e, and 30f at four corners of the flange portion 30 in the plan view (see FIG. IB); a radius of curvature of each radiused shape of these corner portions was 0.754 mm.

(Comparative Example 1)

The rivet nut illustrated in FIGS. 8A to 8C was obtained by a method similar to Example 1 except that the rivet nut was manufactured by cutting process. All corners of the rivet nut had an angled shape. Adhesion of oil to the surface of the rivet nut was observed. The oil was cutting oil.

(Evaluation)

The rivet nut was immersed in a lubricating oil (M680-A, made by SUGIMURA Chemical Industrial Co., Ltd.,

boiling point 200°C) at 25°C to equalize initial adhesion conditions of the lubricating oil between the rivet nut of Example 1 and the rivet nut of Comparative Example 1. Thereafter, durability of a lubricity during storage was evaluated by severe testing. More specifically, the rivet nut held under following conditions was evaluated concerning a lubricity.

Condition 1: 70°C, 168 hours (International Electrotechnical Commission (IEC): heat aging resistance); or
Condition 2: 100°C, 1 hour (IEC: heat resistance)

Details of the evaluation of a lubricity are as follows. As illustrated in FIG. 5, the rivet nut 100 was inserted into the through-holes (60, 70) previously formed in the overlapping portion of the resin member 6 and the metal member 7. In this condition, the riveting portion 40 was riveted by a riveting tool (not shown) while utilizing the thread ridge 2. At this time, feel and condition were observed when the external thread portion of the riveting tool was fitted and fastened to the thread ridge of the rivet nut as the internal thread portion.

According to the rivet nut of Example 1 held under Condition 1 or 2, dissipation of the lubricating oil was significantly prevented by the recesses 20. Accordingly, friction between a surface of the external thread portion and a surface of the internal thread portion sufficiently decreased. Fastening of these thread portions was therefore achieved with sufficient smoothness.

According to the rivet nut of Comparative Example 1 held under Condition 1 or Condition 2, friction between the surface of the external thread portion and the surface of the internal thread portion was relatively large with progress in dissipation of the lubricating oil. Accordingly, fastening of these thread portions was not smoothly performed.

INDUSTRIAL APPLICABILITY

The rivet nut according to the disclosure is useful in a wiring field such as wiring appliances, wiring parts and the like, for example. Wiring may be household wiring or industrial wiring, for example. The rivet nut according to the disclosure is useful for attachment of parts of electric outlets and for assembly of appliances, for example.

[Cross-reference of Related Application]

The present application claims priority to the Paris Convention based on Japanese Patent Application No. 2017-081092 (filed Apr. 17, 2017, entitled "Rivet Nut and Method for Manufacturing the Same").

EXPLANATIONS OF NUMERALS

1       cylindrical body
2       thread ridge
5       lubricating oil
20      recess
30      flange portion
40      riveting portion
100     rivet nut

**Claims**

1.  A rivet nut (100) comprising:

    a cylindrical portion (10) including a cylindrical body opening in an axial direction, and a thread ridge (2) provided in an inner circumferential surface of the cylindrical body (1); and
    a flange portion (30) provided at one end of the cylindrical body (1),
    wherein
    the flange portion (30) includes corners (30a, 30b) each having a radiused shape at an outer circumferential edge of the flange portion (30) in the cross-sectional view;
    **characterised in that**
    a recess (20) is provided at a top of the thread ridge (2) and the recess (20) has a narrowed opening.

2.  The rivet nut (100) of Claim 1, wherein the thread ridge (2) has a hardness higher than a hardness of the cylindrical body (1).

3. The rivet nut (100) of Claim 1 or 2, wherein the flange portion (30) includes corners (30c, 30d, 30e, 30f) each having a radiused shape at four corners of the flange portion (30) in the plan view.

4. The rivet nut (100) of any one of Claims 1 to 3, wherein the recess (20) retains a lubricating oil (5).

5. The rivet nut (100) of Claim 4, wherein the lubricating oil (5) is a forge processing oil, a rolled tapping processing oil, or a mixture thereof.

6. The rivet nut (100) of any one of Claims 1 to 5, wherein the rivet nut (100) is made of an aluminum alloy.

7. The rivet nut (100) of Claim 6, wherein the aluminum alloy is a non-free-cutting aluminum alloy.

8. A method for manufacturing a rivet nut (100), the method comprising;
performing a rolled tapping process to form a thread ridge (2) while forming a recess (20) at a top of the thread ridge (2) and the rolled tapping process is performed for an inner circumferential surface of a cylindrical body (1) of a rivet nut precursor that includes a cylindrical portion (10) including the cylindrical body opening in an axial direction, and a flange portion (30) provided at one end of the cylindrical body (1),
wherein the rolled tapping process is performed to form a narrowed opening in the recess (20) and the rivet nut precursor is obtained by a forging process and the forging process is performed to cause each of corners (30a, 30b) to have a radiused shape at an outer circumferential edge of the flange portion (30) in the cross-sectional view.

9. The method for manufacturing a rivet nut (100) of Claim 8, wherein the forging process is performed to cause each of corners (30c, 30d, 30e, 30f) to have a radiused shape at four corners of the flange portion (30) in the plan view.

10. The method for manufacturing a rivet nut (100) of Claim 8 or 9, wherein the rivet nut precursor is provided by using an aluminum alloy.

11. The method for manufacturing a rivet nut (100) of Claim 10, wherein a non-free-cutting aluminum alloy is used as the aluminum alloy.

12. The method for manufacturing a rivet nut (100) of any one of Claims 8 to 11, wherein the rolled tapping process is performed to cause the thread ridge (2) to have a hardness higher than a hardness of the cylindrical body (1).

13. The method for manufacturing a rivet nut (100) of any one of Claims 8 to 12, wherein the rolled tapping process is performed to cause the recess (20) to retain a lubricating oil (5).

14. The method for manufacturing a rivet nut (100) of Claim 13, wherein a forge processing oil, a rolled tapping processing oil, or a mixture thereof is used as the lubricating oil (5).


**Patentansprüche**

1. Nietmutter (100), umfassend:

   einen zylindrischen Abschnitt (10) mit einem in einer axialen Richtung öffnenden zylindrischen Körper und einem Gewindekamm bzw. -steg (2), der in einer Innenumfangsfläche bzw. -oberfläche des zylindrischen Körpers (1) bereitgestellt ist; und
   einen Flanschabschnitt (30), der an einem Ende des zylindrischen Körpers (1) bereitgestellt ist,
   wobei der Flanschabschnitt (30) Ecken (30a, 30b) enthält, die jeweils eine abgerundete Form an einer Außenumfangskante des Flanschabschnitts (30) in der Querschnittsansicht aufweisen;
   **dadurch gekennzeichnet, dass** eine Aussparung (20) an einer Oberseite bzw. Spitze des Gewindestegs (2) bereitgestellt ist und die Aussparung (20) eine verengte Öffnung aufweist.

2. Nietmutter (100) nach Anspruch 1, wobei der Gewindesteg (2) eine höhere Härte als eine Härte des zylindrischen Körpers (1) aufweist.

3. Nietmutter (100) nach Anspruch 1 oder 2, wobei der Flanschabschnitt (30) Ecken (30c, 30d, 30e, 30f) enthält, die jeweils eine abgerundete Form an vier Ecken des Flanschabschnitts (30) in der Draufsicht aufweisen.

4. Nietmutter (100) nach einem der Ansprüche 1 bis 3, wobei die Aussparung (20) ein Schmieröl (5) zurückbehält bzw. speichert.

5. Nietmutter (100) nach Anspruch 4, wobei das Schmieröl (5) ein Schmiedeverarbeitungsöl, ein Gewinderoll- bzw. -walzverarbeitungsöl oder eine Mischung daraus ist.

6. Nietmutter (100) nach einem der Ansprüche 1 bis 5, wobei die Nietmutter (100) aus einer Aluminiumlegierung besteht.

7. Nietmutter (100) nach Anspruch 8, wobei die Aluminiumlegierung eine nicht zerspanbare Aluminiumlegierung ist.

8. Verfahren zum Herstellen einer Nietmutter (100), wobei das Verfahren umfasst:

Durchführen eines Gewinderoll- bzw. -walzprozesses zum Bilden eines Gewindekamms bzw. -stegs (2), während eine Aussparung (20) an einer Oberseite bzw. Spitze des Gewindestegs (2) gebildet wird, und wobei der Gewinderollprozesses für eine Innenumfangsfläche bzw. -oberfläche eines zylindrischen Körpers (1) eines Nietmuttervorläufers durchgeführt wird, der einen zylindrischen Abschnitt (10) mit dem in einer axialen Richtung öffnenden zylindrischen Körper und einen Flanschabschnitt (30) enthält, der an einem Ende des zylindrischen Körpers (1) bereitgestellt ist;
wobei der Gewinderollprozesses durchgeführt wird, um eine verengte Öffnung in der Aussparung (20) zu bilden, und der Nietmuttervorläufer durch einen Schmiedeprozess erhalten wird und der Schmiedeprozess durchgeführt wird, um zu bewirken, dass jede von Ecken (30a, 30b) eine abgerundete Form an einer Außenumfangskante des Flanschabschnitts (30) in der Querschnittsansicht aufweist.

9. Verfahren zum Herstellen einer Nietmutter (100) nach Anspruch 8, wobei der Schmiedeprozess durchgeführt wird, um zu bewirken, dass jede von Ecken (30c, 30d, 30e, 30f) eine abgerundete Form an vier Ecken des Flanschabschnitts (30) in der Draufsicht aufweist.

10. Verfahren zum Herstellen einer Nietmutter (100) nach Anspruch 8 oder 9, wobei der Nietmuttervorläufer unter Verwendung einer Aluminiumlegierung bereitgestellt wird.

11. Verfahren zum Herstellen einer Nietmutter (100) nach Anspruch 10, wobei eine nicht zerspanbare Aluminiumlegierung als Aluminiumlegierung verwendet wird.

12. Verfahren zum Herstellen einer Nietmutter (100) nach einem der Ansprüche 8 bis 11, wobei der Gewinderollprozesses durchgeführt wird, um zu bewirken, dass der Gewindesteg (2) eine höhere Härte als eine Härte des zylindrischen Körpers (1) aufweist.

13. Verfahren zum Herstellen einer Nietmutter (100) nach einem der Ansprüche 8 bis 12, wobei der Gewinderollprozesses durchgeführt wird, um zu bewirken, dass die Aussparung (20) ein Schmieröl (5) zurückbehält bzw. speichert.

14. Verfahren zum Herstellen einer Nietmutter (100) nach Anspruch 13, wobei ein Schmiedeverarbeitungsöl, ein Gewinderoll- bzw. -walzverarbeitungsöl oder eine Mischung daraus als das Schmieröl (5) verwendet wird.


**Revendications**

1. Écrou de rivet (100) comportant :

une portion cylindrique (10) incluant une ouverture de corps cylindrique dans une direction axiale et une arête de filetage (2) prévue dans une surface circonférentielle interne du corps cylindrique (1) ; et
une portion de bride (30) prévue au niveau d'une extrémité du corps cylindrique (1),
dans lequel la portion de bride (30) inclut des coins (30a, 30b) ayant chacun une forme arrondie au niveau d'un bord circonférentiel externe de la portion de bride (30) dans la vue en section transversale ;
**caractérisé en ce que**
un évidement (20) est prévu au niveau d'un dessus de l'arête de filetage (2) et l'évidement (20) a une ouverture rétrécie.

**2.** Écrou de rivet (100) selon la revendication 1, dans lequel l'arête de filetage (2) a une dureté supérieure à une dureté du corps cylindrique (1).

**3.** Écrou de rivet (100) selon la revendication 1 ou 2, dans lequel la portion de bride (30) inclut des coins (30c, 30d, 30e, 30f) ayant chacun une forme arrondie au niveau de quatre coins de la portion de bride (30) dans la vue en plan.

**4.** Écrou de rivet (100) selon l'une quelconque des revendications 1 à 3, dans lequel l'évidement (20) retient une huile de lubrification (5).

**5.** Écrou de rivet (100) selon la revendication 4, dans lequel l'huile de lubrification (5) est une huile de traitement de forge, une huile de traitement de taraudage roulé ou un mélange de celles-ci.

**6.** Écrou de rivet (100) selon l'une quelconque des revendications 1 à 5, dans lequel l'écrou de rivet (100) est fabriqué dans un alliage d'aluminium.

**7.** Écrou de rivet (100) selon la revendication 6, dans lequel l'alliage d'aluminium est un alliage d'aluminium non de décolletage.

**8.** Procédé de fabrication d'un écrou de rivet (100), le procédé comportant :

la réalisation d'un processus de taraudage roulé pour former une arête de filetage (2), tout en formant un évidement (20) au niveau d'un dessus de l'arête de filetage (2) et le processus de taraudage roulé est réalisé pour une surface circonférentielle interne d'un corps cylindrique (1) d'un précurseur d'écrou de rivet qui inclut une portion cylindrique (10) incluant l'ouverture de corps cylindrique dans une direction axiale et une portion de bride (30) prévue au niveau d'une extrémité du corps cylindrique (1),
dans lequel le processus de taraudage roulé est réalisé pour former une ouverture rétrécie dans l'évidement (20) et le précurseur d'écrou de rivet est obtenu par un processus de forge et le processus de forge est réalisé pour amener chacun des coins (30a, 30b) à avoir une forme arrondie au niveau d'un bord circonférentiel externe de la portion de bride (30) dans la vue en section transversale.

**9.** Procédé de fabrication d'un écrou de rivet (100) selon la revendication 8, dans lequel le processus de forge est réalisé pour amener chacun des coins (30c, 30d, 30e, 30f) à avoir une forme arrondie au niveau de quatre coins de la portion de bride (30) dans la vue en plan.

**10.** Procédé de fabrication d'un écrou de rivet (100) selon la revendication 8 ou 9, dans lequel le précurseur d'écrou de rivet est prévu par utilisation d'un alliage d'aluminium.

**11.** Procédé de fabrication d'un écrou de rivet (100) selon la revendication 10, dans lequel un alliage d'aluminium non de décolletage est utilisé en tant qu'alliage d'aluminium.

**12.** Procédé de fabrication d'un écrou de rivet (100) selon l'une quelconque des revendications 8 à 11, dans lequel le processus de taraudage roulé est réalisé pour amener l'arête de filetage (2) à avoir une dureté supérieure à une dureté du corps cylindrique (1).

**13.** Procédé de fabrication d'un écrou de rivet (100) selon l'une quelconque des revendications 8 à 12, dans lequel le processus de taraudage roulé est réalisé pour amener l'évidement (20) à retenir une huile de lubrification (5).

**14.** Procédé de fabrication d'un écrou de rivet (100) selon la revendication 13, dans lequel une huile de traitement de forge, une huile de traitement de taraudage roulé ou un mélange de celles-ci est utilisé en tant qu'huile de lubrification (5).

[Fig.1A]

[Fig.1B]

[Fig.1C]

[Fig.2]

[Fig.3]

[Fig.4]

[Fig.5]

[Fig.6A]

[Fig.6B]

[Fig.7A]

EP 3 412 923 B1

[Fig.7B]

25

[Fig.7C]

[Fig.8A]

[Fig.8B]

[Fig.8C]

[Fig.9]

**EP 3 412 923 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5033108 A
- JP 2001317518 A
- US 2012216390 A1
- US 2012028070 A1
- JP H533108 A
- JP H710415 B
- JP H790597 B
- JP 2004286217 A
- JP 2009030736 A
- JP 2017081092 A